# EUROPEAN PATENT APPLICATION

(11) **EP 3 540 529 A1**
(43) Date of publication of application: **18.09.2019**
(21) Application number: 17863277.4
(22) Date of filing: 24.04.2017
(51) Int. Cl.: G05B 15/02

(54) **INDOOR ELECTRICAL APPLIANCE CONTROL SYSTEM**

(30) Priority: 11.11.2016 CN 201611042014
(71) Applicant: Siterwell Technology HK Co., Ltd., Hong Kong (CN)
(72) Inventor: WANG, Jiejun, Ningbo Zhejiang 315040 (CN); LIANG, Chih Shun, Coventry CV3 6FU (GB); LIU, Shao Wei, Taipei City (TW); HUANG, Ting Chun, Taipei (TW); CHEN, Chih Yang, New Taipei City (TW)
(74) Representative: Gritschneder, Sebastian
(86) International application number: PCT/CN2017/081582
(87) International publication number: WO 2018/086315

(57) **Abstract**

The present invention provides an indoor electrical control system (10) is connected to a server (30) to retrieval relevant data analysis or security protection information. The indoor electrical control system (10) includes a switch integrated controlling device (20) and a server (30). The switch integrated controlling device (20) is connected to the controlled electrical switch to perform a corresponding operation. The server (30) is signally connected to the switch integrated controlling device (20) via the internet. The switch integrated controlling device (20) directly performs the scheduling control and data retrieval corresponding to the preset action, when the signal connection between the server (30) and the switch integrated controlling device (20) is interrupted to achieve a purpose of full automatic control.

## Description

### (a) Technical Field of the Invention

The present invention relates to an indoor electrical equipment control system, and more particularly to an indoor electrical equipment control system capable of being operated via a server or a switch control device.

### (b) Description of the Prior Art

At present, the indoor electrical equipment controls are operated through an independent switch, and some of them are controlled by a remote controller to turn on or turn off some electrical equipment, such as air conditioners, lights or televisions. However, the disadvantages of the well-known techniques are as follows.
1. The position of the switch is fixed on the wall; therefore, the switch is operated by the user when the user must be close to the switch.
2. The remote controller must correspond to the position of the receiver to transmit the signal, or transmit the signal through the wired connection.
3. The numbers of remote controls are limited. If the remote control suddenly breaks and cannot be repaired immediately, it will not be able to handle.
4. The start-up time of the household electrical equipment can only be set before the household electrical equipment is operated, and the started time or the closed time cannot be changed during the operation.
5. There is no linkage among household electrical equipment, for example, the lights are turned on after the door is opened.
6. The status of the household electrical equipment cannot be known from the outside.

As mentioned above, the current traditional electrical equipment control has many troubles and problems to be improved, how to improve the convenience of electrical equipment control is a technology that needs improvement at present.

### SUMMARY OF THE INVENTION

In view of the above, the present invention provides an indoor electrical equipment control system that can be used by a user for remote control and indoor control to overcome the use of known technology. Further, the relevant electrical equipment can be controlled correspondingly by the server's connection control, that is, if the user automatically opens the relevant light sources, air conditioners after opening the door, and can know the status of each electrical equipment from the external connection to the server, and then can provide related data analysis or security protection data.

To achieve the above object, the present invention provides an indoor electrical equipment control system comprising a switch integrated controlling device and a server; wherein the switch integrated controlling device is used to connect the controlled electrical switch for corresponding operation, and a connected control unit may be operated by the user. The server is signally connected to the switch integrated controlling device via the internet; wherein the switch integrated controlling device will continue to perform the control of the arrangement of the corresponding preset actions and the acquisition and calculation of the corresponding data, when the signal connection between the server and the switch integrated controlling device is interrupted.

The remote server can perform corresponding control and related data acquisition and calculation through the system, such as recording on-off time and calculation of electricity consumption and so on. Further, the corresponding device is automatically activated through the recorded data and the external data (such as time, climate, and traffic conditions) to achieve a purpose of full automatic control. In addition, the control unit of the switch integrated controlling device may be a computer with a touch screen (such as a tablet computer), a smart phone, or a notebook computer. It only needs to install the corresponding control software, and can be used as an external controller to overcome the known problem of a limited number of remote controls.

Further, the switch integrated controlling device is signally connected to at least one image pickup device; wherein the image captured by the image pickup device is transmitted to the switch integrated controlling device, and the image transmitted by the switch integrated controlling device is further transmitted to the server via the internet. The users may view images by means of connecting to the server via the internet to overcome the disadvantages of traditional P2P methods which will increase the load of play end.

Preferably, the signal received by the switch integrated controlling device includes an operating instruction and a key for verifying, and the operating instruction is executed again, after the correctness of the key verified by the switch integrated controlling device to increase the safety of use.

Preferably, the indoor electrical equipment control system further comprises an external controller transmitting the control signal to the server via the internet, and then the server transmits the control signal to the switch integrated controlling device, and the switch integrated controlling device executes the corresponding operation. The external controller may be a mobile phone or a computer with a corresponding control program and an internet connection.

Preferably, the external controller generates a set of a public key and a private key, the public key is stored in the switch integrated controlling device, and the private key is transmitted to store to the external controller. Further, the signal to be transmitted is encoded by the external controller before transmitting the signal, the encoded signal is then transmitted to the switch integrated controlling device, and the public key is unlocked by the switch integrated controlling device. Furthermore, the signal further comprises a time information confirmed whether the time information meets the time at that time before the public key is unlocked. Therefore, the security of use is increased, and confirmation of the time information may improve correctness.

Furthermore, the signals of the switch integrated controlling device of the present invention may be also transmitted to other switch integrated controlling device via a network or other communication means, so that cross-regional switch integrated controlling device can perform corresponding actions with each other.

### BRIEF DESCRIPTION OF THE DRAWINGS

The above and other objects, features and other advantages of the present invention will be more clearly understood from the following detailed description taken in conjunction with the accompanying drawings, in which:
FIG 1 is a schematic diagram of a system of an embodiment according to the present invention; and
FIG 2 is a schematic diagram of a system of another embodiment according to the present invention.

### DETAILED DESCRIPTION OF THE PREFERRED EMBODIMENTS

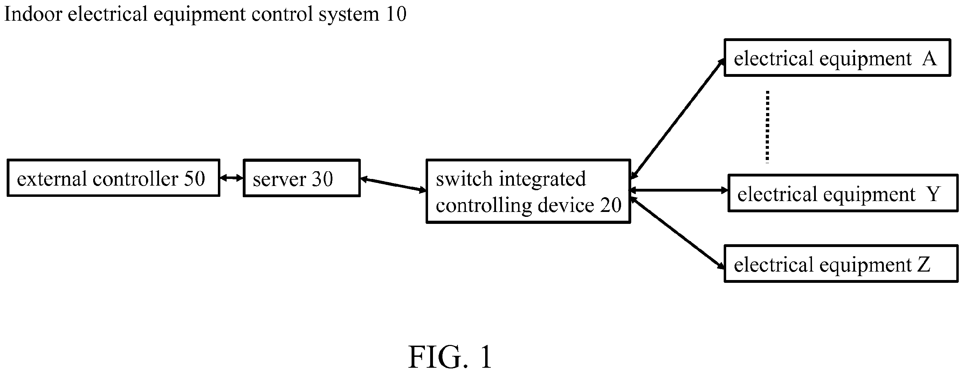

As shown in FIG 1, the invention provides an indoor electrical equipment control system 10. The users perform a remote control and an indoors control and record relevant information for use by this system; further, this system may connect with security system. The regional networks and internet settings is used to transmit signals in this system to overcome the inconvenience of pushing the switches on the specified position of the known technology. Further, the "electrical equipment" of the present invention includes general household electrical equipment, and the present invention further includes a door lock that is opened by using electricity.

The indoor electrical equipment control system 10 of the present embodiment comprises a switch integrated controlling device 20 and a server 30.

The switch integrated controlling device 20 is used to connect switches of the controlled electrical equipment A, Y and Z and includes a control unit (not shown). The user may operate the control unit to perform a related control; alternatively, after the signal sent by the server is received, the corresponding open or the corresponding close or the corresponding adjust is performed according to the content of the signal. The signal connection between the switch integrated controlling device 20 and each electrical equipment is a part of the known art. Therefore, the related technical contents of the connection control will not be described here. Further, the control unit may comprise a base and a computer with a touch screen (such as a tablet computer); wherein the data transmission between the base and the computer with the touch screen can be transmitted via wireless or wired, and the base is connected to various electrical equipment to perform an operation. For example, the base can be plugged into the computer with the touch screen or a tablet computer or a smart phone to achieve a wired connection, and may also be directly transmitted to the base via a wireless signal.

In addition, the switch integrated controlling device 20 may further signally connect sensors, such as a temperature sensor, a humidity sensor or an air pollution sensor and so on. The corresponding electrical equipment is automatically started through retrieving the result values detected by the sensors. When the temperature exceeds the preset value, the air conditioner is started. When the humidity exceeds the preset value, the dehumidifier or the humidifier is started. When the air pollution index is too high, an air cleaner or an exchanger is started.

The signal connection between the server 30 and the switch integrated controlling device 20 are performed via the internet. The switch integrated controlling device 20 may receive the command signal from the server 30 and perform corresponding control according to the command. Simultaneously, the commands transmitted by each switch integrated controlling device 20 or related information of ON/OFF each switch may be transmitted to the server 30. The server 30 may perform correlation calculation, analysis and recording, which is conducive to intelligent management in the future.

The external controller 50 is installed with control software corresponding to the control, and is signally connected to the switch integrated controlling device 20 via the internet; wherein the external controller 50 may be a tablet computer, a smart mobile phone or a computer. After the external controller 50 is connected to the server 30 via the internet, the switch integrated controlling device 20 may directly perform the corresponding information signal transmission. The user may control all the switches or adjust the related settings through the external controller 50. Of course, the permissions may also be set by different external controllers 50. For example, as long as the account number of the user who logs in to the external controller 50 is a child account, it may be limited that the television controller cannot adjust the television during the preset time period.

In additional, when the signal connection between the server 20 and the switch integrated controlling device 30 is interrupted, the switch integrated controlling device 30 directly performs the control corresponding to the preset action and the retrieval and calculation of the corresponding data. Therefore, the overall service is not affected or interrupted by server 20.

As described above, in this embodiment, the remote server 20 may transmit the corresponding control and perform the related data retrieval and calculation, such as the record of ON/OFF time, the calculation of electric power consumption, the access time and so on. Furthermore, the starting point of the corresponding device is automatically started through calculation of the recorded data and the external data (such as time, climate, and traffic conditions) to achieve the advantages of automated control.

As described above, the external controller 50 may be a tablet computer, a smart phone, or a notebook computer, and only needs to install software corresponding to the control, and can be used as the external controller 50 to overcome the problem of a limited number of known remote controllers.

As shown in the figures, the switch integrated controlling device 20 may be further signally connected to at least one image pickup device D; wherein the image captured by the image pickup device D is transmitted to the switch integrated controlling device 20. The image transmitted by the switch integrated controlling device 20 is transmitted to the server 20 via the internet for storage in the server 20. The user may view the transmitted images through a portable smart phone or a tablet computer connected to the server via the internet to overcome the disadvantages of the conventional P2P method which increases the recording end load (the load of the processor is increased because of the simultaneous recording and playing).

In addition, the signal received by the switch integrated controlling device 20 includes an operating instruction and a key for verifying. After the switch integrated controlling device 20 verifies the correctness of the key, the control instruction is executed again. The safety of use may be increased to prevent external intrusion from affecting electrical switch settings.

This embodiment further provides a confidentiality-related setting. The external controller 50 generates a set of a public key and a private key, the public key is stored in the switch integrated controlling device 20, and the private key is transmitted to store to the external controller 50; the signal to be transmitted is encoded by the external controller 50 before transmitting the signal, the encoded signal is then transmitted to the switch integrated controlling device 20 by the server 30, and the public key is unlocked by the switch integrated controlling device 20 to achieve confidentiality. The signal further comprises a time information confirmed whether the time information meets the time at that time before the switch integrated control device 20 executes which the encoded signal is unlocked by the public key. Therefore, the security of use is increased, and the correctness of the information interpretation may improve after confirming the time information to prevent reading the delayed signal from an external interference, or prevent the signal from malicious recording, so that the safety can be greatly improved.

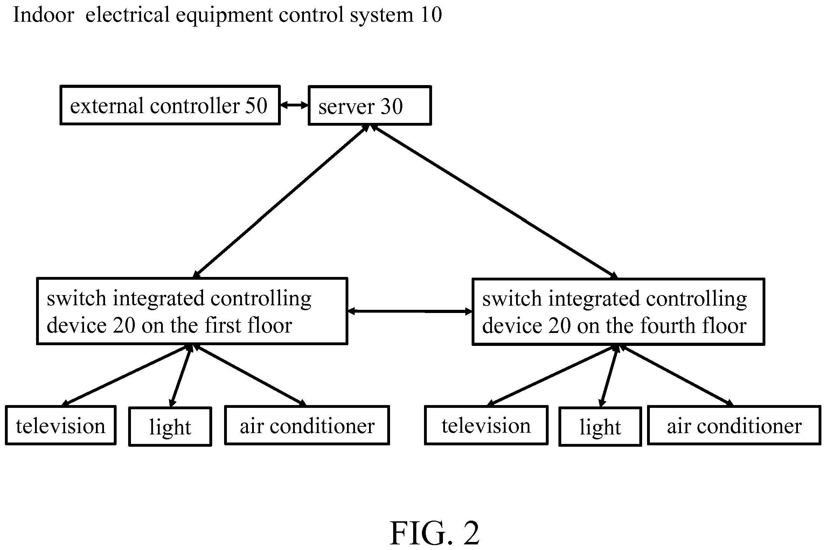

Furthermore, please refer to embodiment shown in figure 2, the switch integrated controlling device 20 has a plurality of units and each of the switch integrated controlling devices is signally connected to different electrical equipment.

This embodiment is suitable for the switch integrated controlling device 20 in different areas to perform corresponding operation actions. For example, in a multi-storey building, each floor is provided with a switch integrated controlling device 20. In the figure, a switch integrated controlling device 20 is on the first floor, and another switch integrated controlling device 20 is on the fourth floor. When the user on the first floor turns off the TV via the switch integrated controlling device 20 or the external controller 50 after 9 o'clock in the evening, the switch integrated controlling device 20 on the first floor will transmit signal to the switch integrated controlling device on the fourth floor. Therefore, the switch integrated controlling device 20 in the bedroom on the fourth floor sends a command to the corresponding switch integrated controlling device 20 on the fourth floor to start the light and the air conditioner. Therefore, when the user is on the fourth floor, the space setting has reached the normal state of use to achieve the effect of intelligent control.

The signal transmission between the switch integrated controlling devices 20 may be connected to the server 30 via the internet to transmit to the corresponding switch integrated controlling device 20. Further, the switch integrated controlling device 20 may be directly communicated through point-to-point communication technology to achieve the purpose of contacting each other for corresponding operations.

The foregoing description, for the purpose of explanation, has been described with reference to specific embodiments; however, the embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the disclosure to the precise forms disclosed. Modifications and variations are possible in view of the above teachings.

## Claims

1. An indoor electrical equipment control system (10), comprising:
a switch integrated controlling device (20) for controlling the connected electrical switch, and the switch integrated controlling device (20) comprising a control unit; and
a server (30) signally connecting to the switch integrated controlling device (20) via the internet;
wherein the switch integrated controlling device (20) directly performs the scheduling control and data retrieval corresponding to the preset action, when the signal connection between the server (30) and the switch integrated controlling device (20) is interrupted.

2. The indoor electrical equipment control system (10) according to claim 1, wherein the switch integrated controlling device (20) is signally connected to at least one image pickup device (D) by the indoor electrical equipment control system (10); wherein the captured images by the image pickup device (D) are transmitted to the switch integrated controlling device (20), and the captured images are then transmitted to the server (30) for storage via the internet.

3. The indoor electrical equipment control system (10) according to claim 1, wherein the signal received by switch integrated controlling device (20) comprises an operating instruction and a key for verifying, and the operating instruction is executed again after the switch integrated controlling device (20) verifies the correctness of the key.

4. The indoor electrical equipment control system (10) according to claim 1, further comprises an external controller (50) transmitting the control signal to the server (30) via the internet, and then the server (30) transmitting the control signal to the switch integrated controlling device (20), and the switch integrated controlling device (20) executing the corresponding operation.

5. The indoor electrical equipment control system (10) according to claim 4, wherein the external controller (50) generates a set of a public key and a private key, the public key is stored in the switch integrated controlling device (20), and the private key is transmitted to store to the external controller; the signal to be transmitted is encoded by the external controller (50) before transmitting the signal, the encoded signal is then transmitted to the server (30), the encoded signal is transmitted to the switch integrated controlling device (20) by the server (30), and the public key is unlocked by the switch integrated controlling device (20); the signal further comprises a time information confirmed whether the time information meets the time at that time before the public key is unlocked.

6. The indoor electrical equipment control system (10) according to claim 1, wherein the control unit is a computer with a touch screen.

7. The indoor electrical equipment control system (10) according to claim 1, wherein the control unit comprises a base and a computer with a touch screen, which the data transmission between the base and the computer with the touch screen can be transmitted via wireless or wired, and the base is signally connected to various electrical equipment to perform an operation.

8. The indoor electrical equipment control system (10) according to claim 1, wherein the switch integrated controlling device (20) is a plurality of units and each of the switch integrated controlling devices (20) is signally connected to each other.

9. The indoor electrical equipment control system (10) according to claim 1, wherein the switch integrated controlling device (20) is signally connected to at least one sensor.
